(19) Europäisches Patentamt
European Patent Office
Office européen des brevets

(11) **EP 3 515 200 B1**

(12) **EUROPEAN PATENT SPECIFICATION**

(45) Date of publication and mention of the grant of the patent:
**20.05.2020 Bulletin 2020/21**

(21) Application number: **17784714.2**

(22) Date of filing: **14.09.2017**

(51) Int Cl.:
***A23D 9/007*** (2006.01)

(86) International application number:
**PCT/US2017/051490**

(87) International publication number:
**WO 2018/057384 (29.03.2018 Gazette 2018/13)**

(54) **OLEOGEL WITH STEARIC ACID**

OLEOGEL MIT STEARINSÄURE

OLÉOGEL AVEC DE L'ACIDE STÉARIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2016 US 201662398584 P**

(43) Date of publication of application:
**31.07.2019 Bulletin 2019/31**

(73) Proprietor: **DOW GLOBAL TECHNOLOGIES LLC**
**Midland, MI 48674 (US)**

(72) Inventors:
• **ERGUN, Roja**
  **Midland**
  **MI 48674 (US)**
• **MEUNIER, David M.**
  **Midland**
  **MI 48674 (US)**

(74) Representative: **f & e patent**
**Braunsberger Feld 29**
**51429 Bergisch Gladbach (DE)**

(56) References cited:
**WO-A1-2010/143066     WO-A1-2012/071651**

• **GRAVELLE A J ET AL: "Influence of solvent quality on the mechanical strength of ethylcellulose oleogels", CARBOHYDRATE POLYMERS, APPLIED SCIENCE PUBLISHERS, LTD. BARKING, GB, vol. 135, 21 August 2015 (2015-08-21), pages 169-179, XP029291371, ISSN: 0144-8617, DOI: 10.1016/J.CARBPOL.2015.08.050**
• **DAVIDOVICH-PINHAS M ET AL: "The role of surfactants on ethylcellulose oleogel structure and mechanical properties", CARBOHYDRATE POLYMERS, APPLIED SCIENCE PUBLISHERS, LTD. BARKING, GB, vol. 127, 13 April 2015 (2015-04-13), pages 355-362, XP029159007, ISSN: 0144-8617, DOI: 10.1016/J.CARBPOL.2015.03.085**
• **MA.A RUIZ MARTINEZ ET AL: "Influence of the concentration of a gelling agent and the type of surfactant on the rheological characteristics of oleogels", IL FARMACO, vol. 58, no. 12, 1 December 2003 (2003-12-01), pages 1289-1294, XP055117540, ISSN: 0014-827X, DOI: 10.1016/S0014-827X(03)00180-0**

**Description**

Fats that are solid at room temperature (23 °C) have been used in various food products for many years. Most solid fats contain an undesirably high proportion of saturated fats and/or trans fats. It is thought that consumption of saturated fats raises the level of blood LDL cholesterol and increase the risk of heart disease and stroke. Thus, it is desirable to replace the saturated fats and/or trans fats with unsaturated fats, which have various nutritional benefits. A common source of unsaturated fats is unsaturated oils such as vegetable oils, but these oils are typically liquid at room temperature or have melting points not far above room temperature. Simply replacing solid fat with liquid oil usually causes undesirable changes in the texture of the food product. It is desirable to replace the solid fat with a composition that is solid at room temperature and that contains mostly unsaturated oil to eliminate the negative health effects of saturated fats.

One approach to this problem has been the use of ethylcellulose oleogels, which are blends of unsaturated oil with a relatively small amount of ethylcellulose polymer. Ethylcellulose oleogels are solid at room temperature. In the course of developing the present invention it has been observed that many ethylcellulose oleogels tend to separate when stored at room temperature; that is, oil tends to leak out of the oleogel during storage. Such separation is undesirable.

WO 2010/143066 describes oleogels that contain ethylcellulose polymer, oil, and surfactant, normally a nonionic surfactant. WO 2012/071651 A1 discloses a thixotropic composition comprising ethylcellulose in combination with a triacylglycerol oil and a non-ionic surfactant, wherein the ethylcellulose concentration is in the range of about 1-15 wt%. A preferred oil is high-stearic sunflower oil. GRAVELLE A J ET AL: "Influence of solvent quality on the mechanical strength of ethylcellulose oleogels", CARBOHYDRATE POLYMERS, vol. 135, 21 August 2015, pages 169-179, is a study of the influence of solvent quality on the mechanical strength of ethylcellulose oleogels. Stearic acid is disclosed as a suitable surfactant. It is desired to provide improved methods of making ethylcellulose oleogel that provide ethylcellulose oleogels that resist separation during storage.

The following is a statement of the invention. The scope of protection is strictly defined by the appended claims.

A first aspect of the present invention is a composition comprising one or more ethylcellulose polymer(s), one or more oil(s), and stearic acid.

The following is a detailed description of the invention.

As used herein, the following terms have the designated definitions, unless the context clearly indicates otherwise.

Ethylcellulose polymer, as used herein, means a derivative of cellulose in which some of the hydroxyl groups on the repeating glucose units are converted into ethyl ether groups. The number of ethyl ether groups can vary. The number of ethyl ether groups is characterized by the "percent ethoxyl substitution." The percent ethoxyl substitution is based on the weight of the substituted product and determined according to a Zeisel gas chromatographic technique as described in ASTM D4794-94 (2003). The ethoxyl substitution (also called "ethyl ether content") is from 10 to 55%.

As used herein, the viscosity of an ethylcellulose polymer is the viscosity of a 5 weight percent solution of that ethylcellulose polymer in a solvent, based on the weight of the solution. The solvent is a mixture of 80% toluene and 20% ethanol by weight. The viscosity of the solution is measured at 25°C in an Ubbelohde viscometer.

A "polymer," as used herein is a relatively large molecule made up of the reaction products of smaller chemical repeat units. Polymers have weight-average molecular weight of 2,000 daltons or higher.

The softening point of a material is the temperature below which the material behaves as a solid and above which it begins to be capable of flow under mild to moderate stress. Softening point is measured by the ring and ball method according to ASTM E28-14.

An ionic group is a chemical group, which may be a portion of a molecule, for which there is one or more value of pH between 4 and 12 at which, when plural ionic groups are in contact with water at that pH, 50 mole percent or more of the ionic groups will be in an ionized state.

As used herein, an oil is a material that has melting point of 35°C or less and that has one or more carbon atom per molecule. An oil has no ionic group. An oil has no chemical group of the structure $-(-CH_2CH_2-O-)_n-$ where n is 2 or more. One category of oils is triglycerides, which are triesters of fatty acids with glycerol. Food oils are oils routinely consumed by human beings. Vegetable oils are triglycerides extracted from plants.

As used herein, the term "oleogel" refers to a mixture that contains one or more oils and one or more ethylcellulose polymers; the oleogel is solid at 25°C. The oleogel may contain additional ingredients such as stearic acid. The oleogel may be a relatively hard solid or a relatively soft solid. A cube of oleogel of height 2 cm, placed on a flat surface at 25°C, will resist collapsing under its own weight to the extent that the height after 1 minute will be 1 cm or higher.

As used herein, a surfactant is a molecule that includes both a hydrocarbon portion and a hydrophilic portion. The hydrocarbon portion contains 4 or more carbon atoms connected to each other in a formation that is linear, branched, cyclic, or a combination thereof. The hydrocarbon portion further contains one or more hydrogen atom. The hydrophilic portion would be soluble in water if it existed as a separate molecule, disconnected from the remainder of the surfactant molecule. Hydrophilic portions may be, for example, ionic groups or nonionic water-soluble groups such as, for example, EO groups, which have the structure -(CH$_2$CH$_2$-O-)$_n$- , where n is 1 or higher. A surfactant with one or more ionic groups is an ionic surfactant, and a surfactant with no ionic group is a nonionic surfactant.

Any ethylcellulose polymer may be used in the composition of the present invention. The ethoxyl substitution content of the ethylcellulose polymer is preferably 10% or more; more preferably 30% or more; more preferably 40% or more; preferably 45% or more; more preferably 48% or more. The ethoxyl substitution content of the ethylcellulose polymer is preferably 55% or less; more preferably 53% or less; more preferably 52% or less; more preferably 51% or less; more preferably 50% or less.

The ethylcellulose polymer preferably has viscosity of 2 mPa•s or higher; more preferably 5 mPa•s or higher; more preferably 12 mPa•s or higher; more preferably 16 mPa•s or higher. The ethylcellulose polymer preferably has viscosity of 5000 mPa•s or lower; more preferably 2000 mPa•s or lower; more preferably 1000 mPa•s or lower; more preferably 500 mPa•s or lower; more preferably 350 mPa•s or lower; more preferably 250 mPa•s or lower; more preferably 125 mPa•s or lower.

The ethylcellulose polymer has softening point of 100°C or higher; preferably 120°C or higher; more preferably 130°C or higher. The ethylcellulose polymer preferably has softening point of 160°C or lower; more preferably 150°C or lower; more preferably 140°C or lower.

Commercially available forms of ethylcellulose polymer which may be used in the invention include, for example, those available under the name ETHOCEL™, from The Dow Chemical Company, including, for example, ETHOCEL™ Standard 4, ETHOCEL™ Standard 7, ETHOCEL™ Standard 10, ETHOCEL™ Standard 20, ETHOCEL™ Standard 45, or ETHOCEL™ Standard 100 with ethoxyl substitution content from 48.0 to 49.5%. Other commercially available ethylcellulose polymers useful in embodiments of the invention include certain grades of AQUALON™ ETHYLCELLULOSE, available from Ashland, Inc., and certain grades of ASHACEL™ ethylcellulose polymers, available from Asha Cellulose Pvt. Ltd.

Preferably the amount of ethylcellulose polymer in the composition is, by weight based on the weight of the composition, 1% or more; more preferably 2% or more; more preferably 4% or more; more preferably 6% or more. Preferably the amount of ethylcellulose polymer in the composition is, by weight based on the weight of the oleogel, 20% or less; more preferably 18% or less; more preferably 16% or less; more preferably 14% or less.

The oleogel contains oil. Preferred oils are food oils. Preferred food oils are vegetable oils. Preferred vegetable oils are cottonseed oil, peanut oil, coconut oil, linseed oil, palm kernel oil, rapeseed oil (also known as canola oil), palm oil, sunflower oil, olive oil, and mixtures thereof. Preferred vegetable oils are extracted from plant sources and have not been hydrogenated or modified by other chemical reaction. Preferred oils are triglycerides.

Preferably the amount of oil in the composition is, by weight based on the weight of the composition, 80% or more; more preferably 82% or more; more preferably 84% or more; more preferably 86% or more. Preferably the amount of oil in the composition is, by weight based on the weight of the composition, 99% or less; more preferably 98% or less; more preferably 96% or less; 94% or less.

The composition contains stearic acid. The amount of stearic acid in the composition is, by weight based on the weight of the composition, 0.5% or more; more preferably 1% or more; more preferably 2% or more. The amount of stearic acid in the composition is, by weight based on the weight of the composition, 15% or less; more preferably 10% or less; more preferably 7% or less; more preferably 5% or less.

The composition is also characterized by the amount of all surfactants other than stearic acid. The amount of all surfactants other than stearic acid is, by weight based on the weight of the composition, 0 to 1%; more preferably 0 to 0.5%; more preferably 0 to 0.2%; more preferably 0 to 0.1%. More preferably, the composition contains no surfactant other than stearic acid.

The composition may be characterized by the amount of all compounds other than stearic acid, oil, and ethylcellulose polymer. Preferably, the amount of all compounds other than stearic acid, oil, and ethylcellulose polymer is, by weight based on the weight of the composition, 0 to 10%; more preferably 0 to 5%; more preferably 0 to 2%; more preferably 0 to 1%; more preferably 0 to 0.5%. More preferably, the composition contains no compound other than stearic acid, oil and ethylcellulose polymer.

Preferably, the composition is an oleogel.

The firmness of an oleogel is assessed as follows. Oleogel, while at a temperature above the softening point of the ethylcellulose polymer, is poured into a shallow crystallizing dish of inner diameter 9.1 cm, to a depth of 2.5 cm. Approximately 24 hours after gel was made, the oleogel has cooled to room temperature (approximately 23°C). The dispensing end of a syringe having inner diameter of 2 mm is inserted into the center of the oleogel. A round compression probe is placed in the middle of the syringe. Firmness testing is performed at room temperature (23°C) in back extrusion mode using TA.XT plus texture analyzer from Stable Microsystems, using 13 mm immersion depth and cell force of 5 kgf. Preferably, the oleogel has firmness of 0.5 N or more; more preferably 1 N or more; more preferably 2 N or more; more preferably 5 N or more. Preferably, the oleogel has firmness of 50 N or less; more preferably 40 N or less.

The composition may be made by any of a variety of processes. Preferably, oil, ethylcellulose polymer, stearic acid, and optional additional ingredients are brought together to form a mixture. Preferably the mixture is heated to a temperature above the softening point of the ethylcellulose polymer. Preferably the mixture is subjected to mechanical agitation. Mechanical agitation may be suitably applied by passing the mixture through an extruder, passing the mixture through a static mixer, by rotating one or more mechanical object within the mixture (such as a spinning propeller blade or the elements of a rotor stator mixer), or a combination thereof. Preferably the mixture is heated and agitated at the same time.

Some suitable processes are batch processes, in which oil, ethylcellulose polymer, stearic acid, and optional additional ingredients are placed in a vessel, and the resulting mixture is heated and agitated, and then the entire mixture is removed from the vessel. Some other suitable processes are continuous. One suitable continuous process is extrusion, in which oil, ethylcellulose polymer, stearic acid, and optional other ingredients are continuously fed to the inlet or inlets of an extruder, which heats, agitates, and transports the resulting mixture, which is continuously removed from the extruder at an outlet.

The following are examples of the present invention.

The materials used were as follows:

EC = ETHOCEL STD 45 ethylcellulose polymer from The Dow Chemical Company
oil = omega 9 canola oil
AAM = ACETEM™ Acetylated Monoglycerides from Savannah Surfactants
CAE = CITREM™ Citric acid esters of mono- and diglycerides - liquid, from Savannah Surfactants
PGPR = polyglycerol polyricinoleate, from Savannah Surfactants
SM = DURTAN™ 60 sorbitan monostearate, with tocopherols added at 100 ppm, from IOI Loders Croklaan
SSL = EMPLEX™ sodium stearoyl-2-lactate, from Caravan Ingredients, Lenexa, KS, USA
LAE = LACTEM™ lactic acid esters of monoglycerides, from Savannah Surfactants

Example 1: Preparation of Oleogel

Oleogel was made using the following method: Ethylcellulose (ETHOCEL™ Std. 45, from the Dow Chemical Company) (545g) and canola oil (4,906g) were placed in a 7.57 liter (two gallon) jacketed glass reactor under nitrogen blanket. The mixture was heated to 155 °C over 200 minutes while stirring at 200 rpm with dual-tier 3" A320 impellers attached to an overhead stirring motor and held at that temperature for 35 min under continuous stirring at 350 rpm. At the end of the holding time, the heater was turned off and the mixture was cooled to 130 °C while stirring at 100 rpm. When the temperature reached 130 °C, the liquid mixture was drained to three nitrogen-purged metal cans, and these were allowed to cool to room temperature and form gel.

Example 2: Testing of Oleogel

Oleogel, while at a temperature above the softening point of the ethylcellulose polymer, was poured into a shallow crystallizing dish (100 x 50 mm), filled about halfway. Approximately 24 hours after gel was made, the oleogel had cooled to room temperature (approximately 23°C), and samples were prepared for the oil separation measurements. The dispensing end of a 20 mL syringe was removed by cutting perpendicular to the axis of the syringe. The plunger was removed from syringe, and the syringe was inserted into the center of the oleogel. Then the syringe was removed from the oleogel, carrying a plug of oleogel inside the barrel of the syringe. The syringe was then positioned above a tared weighing boat, and the plunger was inserted into the barrel of the syringe to force the plug of oleogel out of the syringe and onto the weighing boat. The weight of plug (should be around 8.3 grams) was recorded. (1 crystallizing dish should have enough gel for 4 plugs). A glass plate 7.62 cm X 7.62 cm X 0.635 cm (3x3x1/4 inches) that weighed approximately 83 grams was placed on top of the gel. At various time intervals, oil that separated from the plug was removed, and the weight of the remaining plug was recorded. Two or three replicate plugs were tested from each crystallizing dish. The result recorded was "weight loss", expressed as a percentage, as follows:

$$\text{weight loss} \ = \ 100 \ X \ (\text{initial weight} - \text{final weight}) \ / \ (\text{initial weight})$$

After 5 weeks, the weight loss results were as follows. Results for replicate samples are shown:

Table 1 - Weight Loss (%)

| Surfactant | first replicate | second replicate | third replicate |
|---|---|---|---|
| none* | 15 | 15 | |

(continued)

| Surfactant | first replicate | second replicate | third replicate |
|---|---|---|---|
| AAM* | 15 | 24 | |
| benzyl alcohol* | 17 | 22 | |
| CAE* | 17 | 20 | |
| PGPR* | 14 | 14 | |
| SM* | 17 | 18 | |
| SSL* | 10 | 15 | |
| LAE* | 24 | 25 | |
| linoleic acid* | 24 | 24 | |
| oleic acid* | 15 | 19 | |
| stearic acid | 4 | 6 | 8 |
| * comparative | | | |

Stearic acid performed better than any of the other compounds.

**Claims**

1. A composition comprising one or more ethylcellulose polymer(s), one or more oil(s), and stearic acid, wherein the stearic acid is present in an amount of 0.5% to 15% by weight based on the weight of the composition, with the proviso that, if any surfactants other than stearic acid are present in the composition, the surfactants other than stearic acid are present in a total amount of 1% or less, by weight based on the weight of the composition.

2. The composition of claim 1, wherein the oil comprises one or more triglycerides.

3. The composition of claim 1, wherein the ethylcellulose polymer is present in an amount of 2% to 20% by weight based on the weight of the composition.

4. The composition of claim 1, wherein the oil is present in an amount of 80% to 99% by weight based on the weight of the composition.

5. The composition of claim 1, wherein the oil is cottonseed oil, peanut oil, coconut oil, linseed oil, palm kernel oil, rapeseed oil (also known as canola oil), palm oil, sunflower oil, olive oil, and mixtures thereof.

6. The composition of claim 1, wherein the amount of stearic acid in the composition is, by weight based on the weight of the composition, 1% or more; preferably 2% or more.

7. The composition of claim 1, wherein the amount of stearic acid in the composition is, by weight based on the weight of the composition, 10% or less; preferably 7% or less; more preferably 5% or less.

8. Use of stearic acid for providing ethylcellulose oleogels with resistance towards separation, *i.e.* leaking of oil out of the oleogel during storage.

**Patentansprüche**

1. Eine Zusammensetzung umfassend ein oder mehrere Ethylcellulosepolymer(e), ein oder mehrere Öl(e) und Stearinsäure, wobei die Stearinsäure in einer Menge von 0,5 Gew.-% bis 15 Gew.-%, bezogen auf das Gewicht der Zusammensetzung, vorhanden ist, unter der Voraussetzung, dass, falls irgendwelche von Stearinsäure verschiedenen oberflächenaktiven Mittel in der Zusammensetzung vorhanden sind, die von Stearinsäure verschiedenen oberflächenaktiven Mittel in einer Gesamtmenge von 1 Gew.-% oder weniger, bezogen auf das Gewicht der Zusammensetzung, vorhanden sind.

**2.** Die Zusammensetzung gemäß Anspruch 1, wobei das Öl ein oder mehrere Triglycerid(e) umfasst.

**3.** Die Zusammensetzung gemäß Anspruch 1, wobei das Ethylcellulosepolymer in einer Menge von 2 Gew.-% bis 20 Gew.-%, bezogen auf das Gewicht der Zusammensetzung, vorhanden ist.

**4.** Die Zusammensetzung gemäß Anspruch 1, wobei das Öl in einer Menge von 80 Gew.-% bis 99 Gew.-%, bezogen auf das Gewicht der Zusammensetzung, vorhanden ist.

**5.** Die Zusammensetzung gemäß Anspruch 1, wobei das Öl Baumwollsamenöl, Erdnussöl, Kokosnussöl, Leinsamenöl, Palmkernöl, Rapsöl (auch als Canolaöl bekannt), Palmöl, Sonnenblumenöl, Olivenöl und Mischungen davon ist.

**6.** Die Zusammensetzung gemäß Anspruch 1, wobei die Menge an Stearinsäure in der Zusammensetzung 1 Gew.-% oder mehr, vorzugsweise 2 Gew.-% oder mehr, bezogen auf das Gewicht der Zusammensetzung, beträgt.

**7.** Die Zusammensetzung gemäß Anspruch 1, wobei die Menge an Stearinsäure in der Zusammensetzung 10 Gew.-% oder weniger, vorzugsweise 7 Gew.-% oder weniger, noch bevorzugter 5 Gew.-% oder weniger, bezogen auf das Gewicht der Zusammensetzung, beträgt.

**8.** Verwendung von Stearinsäure zur Bereitstellung von Ethylcellulose-Oleogelen mit Resistenz gegen Trennung, d.h. Austreten von Öl aus dem Oleogel während der Lagerung.

## Revendications

**1.** Composition comprenant un ou plusieurs polymère(s) d'éthyl-cellulose, une ou plusieurs huile(s) et de l'acide stéarique, dans laquelle l'acide stéarique se trouve en une proportion de 0,5 % à 15 % en poids par rapport au poids de la composition, sous réserve que, si des tensioactifs autres que l'acide stéarique se trouvent dans la composition, ils s'y trouvent en une proportion totale de 1 % en poids ou moins par rapport au poids de la composition.

**2.** Composition selon la revendication 1, dans laquelle l'huile comprend un ou plusieurs triglycéride(s).

**3.** Composition selon la revendication 1, dans laquelle le polymère d'éthyl-cellulose se trouve en une proportion de 2 % à 20 % en poids par rapport au poids de la composition.

**4.** Composition selon la revendication 1, dans laquelle l'huile se trouve en une proportion de 80 % à 99 % en poids par rapport au poids de la composition.

**5.** Composition selon la revendication 1, dans laquelle l'huile est de l'huile de graine de coton, de l'huile d'arachide, de l'huile de coco, de l'huile de graine de lin, de l'huile de palmiste, de l'huile de colza (également connue sous le nom d'huile de canola), de l'huile de palme, de l'huile de tournesol, de l'huile d'olive ou une combinaison de ces huiles.

**6.** Composition selon la revendication 1, la proportion en poids d'acide stéarique dans la composition, rapportée au poids de la composition, valant 1 % ou plus, et de préférence 2 % ou plus.

**7.** Composition selon la revendication 1, la proportion en poids d'acide stéarique dans la composition, rapportée au poids de la composition, valant 10 % ou moins, de préférence 7 % ou moins, et mieux encore 5 % ou moins.

**8.** Utilisation d'acide stéarique pour fournir des oléogels d'éthyl-cellulose dotés de résistance à la séparation, i.e. l'écoulement d'huile hors de l'oléogel pendant l'entreposage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010143066 A

- WO 2012071651 A1

**Non-patent literature cited in the description**

- **GRAVELLE A J et al.** Influence of solvent quality on the mechanical strength of ethylcellulose oleogels. *CARBOHYDRATE POLYMERS,* 21 August 2015, vol. 135, 169-179